# FASCICULE DE BREVET EUROPEEN

(11) **EP 1 016 566 B1**
(45) Date de publication et mention de la délivrance du brevet: **25.02.2004**
(21) Numéro de dépôt: 99403316.5
(22) Date de dépôt: 29.12.1999
(51) Int. Cl.: B60R 16/02

(54) **Dispositif de commande multifonctions pour véhicule**
Kraftfahrzeug-Multifunktionssteurungsvorrichtung
Vehicle multifunction control device

(30) Priorité: 29.12.1998 FR 9816572
(43) Date de publication de la demande: 05.07.2000
(73) Titulaire: Renault s.a.s., 92100 Boulogne Billancourt (FR)
(72) Inventeur: Doignon, Philippe, 75015 Paris (FR)

(56) Documents cités:
- EP-A- 0 366 132
- EP-A- 0 794 089
- DE-C- 3 934 333
- DE-U- 29 604 717

## Description

L'invention concerne un dispositif de commande multifonctions, notamment pour véhicule automobile.

Les nouveaux équipements qui sont installés actuellement dans les véhicules automobiles pour offrir des prestations de navigation, d'informations de trafic routier, de multimédia ou de télématique par exemple, réclament de la part de l'utilisateur des manipulations relativement complexes. En particulier, il doit entrer des données, choisir dans une liste, déplacer un curseur sur un fond de carte électronique.

Cela a pour conséquence que le nombre de boutons que l'utilisateur doit manipuler augmente avec le nombre de prestations à commander. De plus, cela implique des détournements du regard plus importants, car la manipulation des boutons de commande à l'aveugle devient plus complexe. Enfin, plusieurs stratégies de commande des équipements embarqués tels que des boutons, des curseurs ou autres, peuvent coexister et perturber le conducteur notamment.

Une solution actuelle est décrite dans le brevet européen EP 0 831 504 au nom de PHILIPS, qui concerne un bouton rotatif multifonctions selon le préambule de la revendication 1. Il permet de déplacer un curseur sur différents éléments d'une liste affichée sur un écran en tournant ledit bouton, de valider un de ces éléments en appuyant sur le bouton ou de revenir en arrière vers un menu précédent par exemple, en tirant ce bouton.

Bien que cette solution soit bien adaptée à la sélection d'items dans des menus successifs, elle ne l'est pas du tout au déplacement d'un curseur sur un écran à deux dimensions, dans le but par exemple de sélectionner une zone particulière sur un fond de carte électronique.

L'invention propose un dispositif de commande multifonctions qui est facilement manipulable à l'aveugle et qui permet une stratégie de commande commune à plusieurs équipements.

L'objet de l'invention est un dispositif de commande multifonctions constitué par un bouton poussoir rotatif relié électriquement à au moins un équipement électronique du véhicule qu'il est destiné à commander, caractérisé en ce qu'il comporte de plus au moins trois capteurs de pression solidaires d'un support fixe par rapport au bouton, actionnés par pressions latérales sur le bouton et connectés à un circuit électronique permettant de définir un déplacement dans toutes les directions par comparaison des différentes pressions reçues par chacun des capteurs entre elles.

Ce dispositif assure la commande d'un nombre maximum d'équipements, permet la manipulation à l'aveugle et augmente la flexibilité et l'adaptabilité du poste de conduite pour que l'introduction de nouveaux équipements et de services n'entraîne pas l'apparition de nouveaux boutons de commande.

D'autres caractéristiques et avantages de l'invention apparaîtront à la lecture de la description d'exemples de réalisation du dispositif de commande multifonctions, illustrée par les figures suivantes qui sont :
- les figures 1ₐ à 1_{d} : les manipulations possibles du dispositif de commande selon l'invention ;
- les figures 2 et 3 : deux exemples de réalisation non limitatifs du dispositif de commande selon l'invention ;
- les figures 4ₐ et 4_{b} : deux exemples d'implantation du dispositif de commande de plusieurs équipements dans un véhicule automobile;
- la figure 5 : un exemple d'actions possibles sur le dispositif de commande selon l'invention ;
- les figures 6ₐ et 6_{b} : deux exemples d'utilisation du dispositif de commande selon l'invention, dans un menu respectivement à une et à deux dimensions ;
- la figure 7 : un exemple d'utilisation du dispositif de commande selon l'invention, dans un fond de carte.

Pour résoudre les problèmes mentionnés auparavant, l'invention propose un dispositif totalement intégré formant un seul organe de commande.

Il est composé d'un bouton poussoir rotatif, relié électriquement à au moins un équipement électronique, comme l'aide à la navigation ou au guidage par exemple, qu'il est destiné à commander sous l'action de l'utilisateur.

Sa caractéristique principale réside dans l'adjonction de capteurs de pression, solidaires d'un support fixe par rapport au bouton et destinés à être actionnés par pressions latérales sur le bouton.

Ils doivent être au nombre d'au moins trois pour qu'un circuit électronique associé puisse définir un déplacement dans toutes les directions possibles à partir de la comparaison de ces différentes pressions, reçues par chacun des capteurs entre elles. Un tel circuit peut être intégré à l'équipement électronique qu'il est destiné à commander.

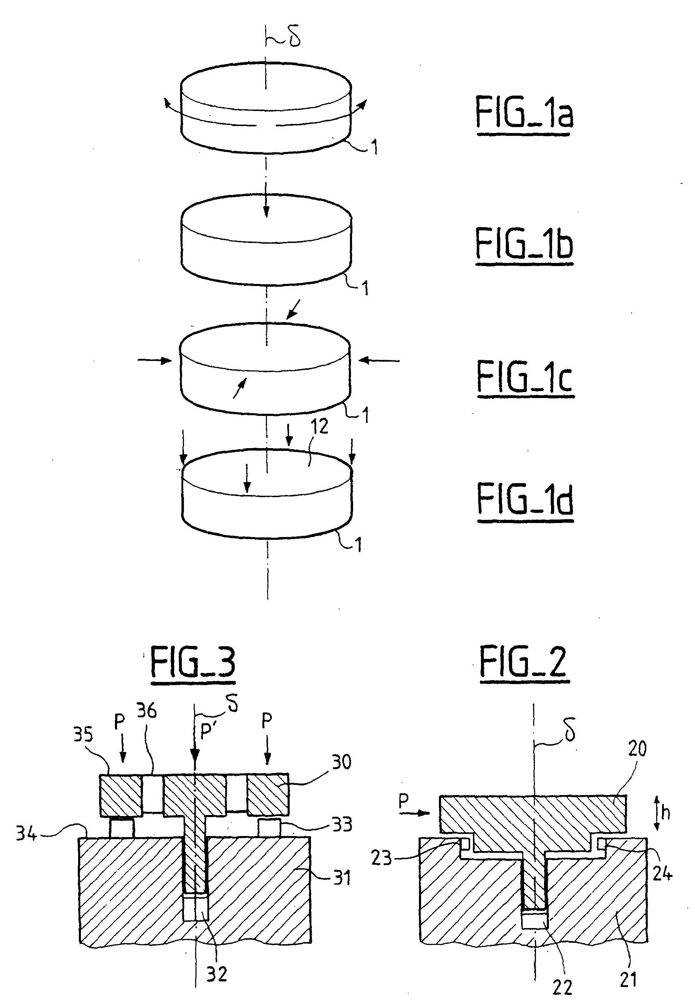

Les figures 1ₐ à 1_{d} donnent quatre exemples d'actions possibles sur le dispositif de commande multifonctions. Selon la figure 1ₐ, l'utilisateur peut effectuer la rotation du bouton 1 dans les deux sens opposés, symbolisés par des flèches, perpendiculairement à l'axe de symétrie δ du bouton. Cette rotation est utilisée pour la sélection dans un menu à une dimension, par exemple le déplacement d'un curseur sur une liste.

La figure 1_{b} concerne l'appui central sur le bouton 1 le long de l'axe de symétrie δ. Cette action peut servir à valider soit l'item sélectionné par le curseur de l'écran d'affichage dans une liste à une dimension, soit l'item situé sous le curseur dans le cas d'une liste à deux dimensions, sur une carte par exemple.

La figure 1_{c} est relative aux appuis latéraux perpendiculairement à l'axe de symétrie δ du bouton, à sa périphérie 11. Ils permettent le déplacement du curseur sur un plan à deux dimensions.

La figure 1_{d} est un autre exemple d'appuis latéraux, effectués parallèlement à l'axe δ, en périphérie de la surface 12 du bouton 1.

Selon un premier mode de réalisation d'un dispositif de commande multifonctions, les capteurs de pression sont disposés sur le support fixe parallèlement à l'axe de symétrie δ, de façon à être actionnés par appui latéral perpendiculaire à ce même axe δ.

Un exemple de réalisation non limitatif d'un tel dispositif de commande est représenté schématiquement, selon une vue transversale parallèle à l'axe de symétrie δ, sur la figure 2. Ce dispositif est constitué d'un bouton 20, de forme symétrique autour d'un axe δ autour duquel il est susceptible de tourner par action de son utilisateur, et de dimension h, ou hauteur, suivant cet axe suffisante pour permettre au doigt de l'utilisateur de pousser le bouton perpendiculairement à l'axe δ. Ce bouton 20 est logé dans un support 21, fixe par rapport au bouton qui peut être enfoncé par la pression d'un doigt de l'utilisateur jusqu'à une position dite de validation. Cette position est définie par un contact électrique 22 solidaire du support 21, généralement placé sur l'axe δ.

Des capteurs de pression 23 sont disposés sur le support 21, sur sa paroi interne 24 en regard du bouton 20 de façon à être comprimés lorsque le doigt de l'utilisateur exerce une pression P sur un côté de la hauteur du bouton.

Le bouton 20 et le support 21 sont réalisés en matériau rigide, du plastique par exemple, et les capteurs de pression 23 peuvent être du type piézo-électrique.

Selon un deuxième mode de réalisation, les capteurs de pression sont disposés sur le support fixe perpendiculairement à l'axe de symétrie δ pour être actionnés par appui latéral sur la surface du bouton, parallèlement à ce même axe δ.

Un exemple de réalisation est représenté schématiquement selon une vue transversale parallèle à l'axe δ, sur la figure 3. Il comporte un bouton 30, de forme symétrique autour d'un axe δ de rotation. Comme pour le mode précédent, il est logé dans un support 31 fixe par rapport à lui et peut être enfoncé selon l'axe δ jusqu'à une position dite de validation, définie par un contact électrique 32 solidaire du support 31. Des capteurs de pression 33 sont placés sur le support 31, sur sa surface extérieure 34 en regard de la périphérie 35 du bouton 30, de façon à subir des pressions exercées par le doigt de l'utilisateur parallèlement à l'axe δ sur un côté de ce pourtour 35.

Pour qu'une pression P exercée sur un côté du pourtour 35 du bouton 30, parallèlement à l'axe δ ne soit confondue avec une pression P' centrale et ne déclenche une validation intempestive, le bouton 30 est réalisé en matériau rigide dans sa partie centrale autour de l'axe δ et sur son pourtour 35, mais en matériau souple sur une couronne 36 centrée sur l'axe δ mais de diamètre moyen inférieur au diamètre intérieur du pourtour pour ne pas être en vis-à-vis des capteurs de pression 33.

Ce matériau souple permet d'exercer une pression latérale comme le montre la figure 1_{d} sans occasionner de mouvement parallèle à l'axe δ comme le montre la figure 1_{b}. Les capteurs de pression, 23 ou 33 selon le mode de réalisation du dispositif de commande, sont connectés électriquement à un calculateur électronique d'un des équipements du véhicule, qui est relié lui-même par une interface multiplexée au bus multiplexé du véhicule. Les informations délivrées par les capteurs de pression traduisant les manipulations du bouton par l'utilisateur sont ensuite traitées puis envoyées sur le bus multiplexé qui les transmet aux calculateurs qui lui sont connectés. Un retour des actions correspondant à la manipulation effectuée peut être affichée sur un écran de visualisation, et/ou indiqué par synthèse de la parole.

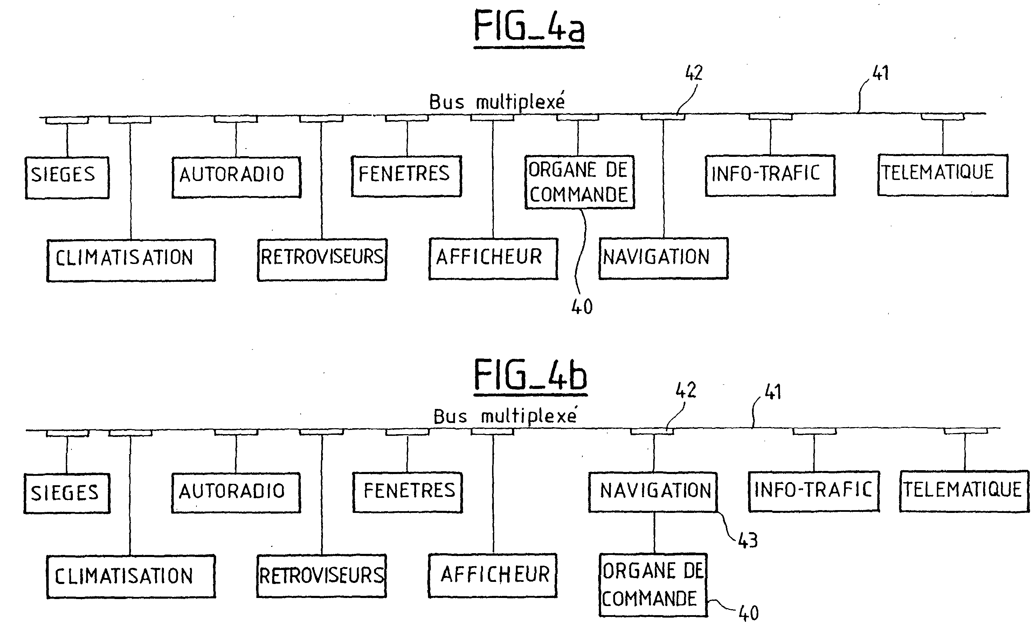

Le dispositif de commande multifonctions 40 est connecté au bus multiplexé 41 du véhicule, de deux façons possibles : soit directement à travers une interface 42 de multiplexage, comme le montre le schéma fonctionnel de la figure 4ₐ, soit par l'intermédiaire de l'unité de traitement d'un calculateur d'équipement 43 selon le schéma de la figure 4_{b}. Il peut ainsi commander tout équipement connecté à ce bus multiplexé. Dans le cas de la figure 4_{b}, le dispositif de commande 40 est relié au calculateur de navigation dont l'interface multiplexée 44 le connecte au bus 41, mais il sert à la commande des autres équipements tels que la prestation d'informations trafic, de télématique, l'afficheur des fonctions du véhicule, les vitres électriques, l'orientation des rétroviseurs extérieurs, l'autoradio, la climatisation ou le réglage de la position des sièges. Ces exemples d'implantation du bouton de commande peuvent être étendus à la commande d'autres prestations dans le véhicule.

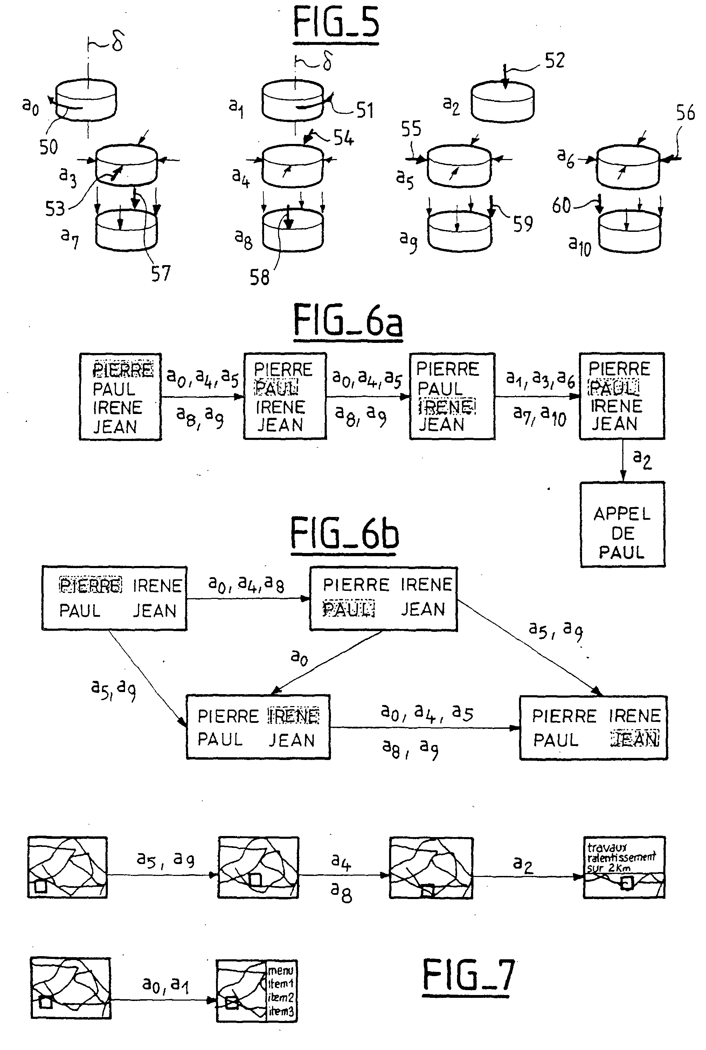

La figure 5 montre plusieurs exemples d'actions possibles sur le bouton, illustrant le caractère intuitif de l'utilisation du bouton de commande, laissant à l'utilisateur le choix de la manipulation qu'il estime la plus appropriée, pour déplacer par exemple un curseur sur les différents éléments d'une liste apparaissant sur un écran.

Les flèches 50 et 51 correspondent à des rotations a₀ et a₁ autour de l'axe δ de symétrie du bouton, la flèche 52 à une pression a₂ selon l'axe δ, les flèches 53 à 56 à des pressions latérales a₃ à a₆ perpendiculaires à l'axe δ et les flèches 57 à 60 à des pressions latérales a₇ à a₁₀ parallèles à l'axe δ.

La validation d'un choix est réalisée par pression au centre du bouton de commande le long de l'axe de symétrie δ, selon l'action a_{2.}

Le déplacement d'un curseur dans une liste d'éléments figurant sur un écran d'affichage est réalisé de deux façons différentes possibles : soit par rotation du bouton, soit par pression sur un de ses côtés.

La rotation du bouton dans le sens de rotation des aiguilles d'une montre correspondant à l'action a₀ fait se déplacer le curseur sur l'élément suivant, alors que l'action a₁ dans le sens opposé à la rotation des aiguilles d'une montre le fait se déplacer sur l'élément précédent.

Dans le cas d'une pression sur un côté du dispositif de commande, que ce soit perpendiculairement (actions a₃ à a₆) ou parallèlement (actions a₇ à a₁₀) à l'axe de symétrie δ, le curseur de l'écran d'affichage se déplace d'un seul élément dans la direction et le sens indiqués par la pression. Ainsi, le curseur se déplace vers le haut de l'écran pour les actions a₃ et a₇, vers le bas pour les actions a₄ et a₈, vers la droite pour les actions a₅ et a₉ et vers la gauche pour les actions a₆ et a₁₀. Une pression continue sur un des côtés du dispositif de commande provoque un déplacement du curseur sur plusieurs items successifs, les uns après les autres, ce déplacement cessant lorsque l'utilisateur cesse d'appuyer sur le bouton. Lorsque ces déplacements ne sont pas possibles, le curseur se déplace vers l'élément suivant pour les actions a₃, a₇, a₅ et a₉, ou vers l'élément précédent pour les actions a₄, a₈, a₆ et a₁₀.

La figure 6ₐ est un exemple d'utilisation du dispositif de commande multifonctions dans une liste d'un menu à une dimension. Pour passer de PIERRE à PAUL, l'utilisateur peut effectuer au choix les actions a₀, a₄ ou a₈, a₅ ou a₉. Pour passer de PAUL à IRENE, il peut effectuer les mêmes actions et pour revenir de IRENE à PAUL, il peut faire les actions a₁, a₃ ou a₇, a₆ ou a₁₀. Enfin, pour valider le choix de PAUL, il effectue l'action a₂.

Sur l'exemple de la figure 6_{b}, représentant une liste dans un menu à deux dimensions, le passage de PIERRE à PAUL s'effectue par les actions a₀ ou a₄ ou a₈, puis le passage de PAUL à JEAN s'effectue par l'action a₅ ou a₉, tandis que le passage de PAUL à IRENE peut se faire par l'action a₀. Selon une deuxième variante, le passage de PIERRE à JEAN peut s'effectuer autrement, en passant d'abord par IRENE suivant l'action a₅ ou a₉ puis de IRENE à JEAN suivant l'une des actions a₀, a₄ ou a₈, a₅ ou a₉.

Le déplacement d'un curseur sur un fond de carte, comme l'illustre la figure 7, est réalisé par appui sur le pourtour du bouton, perpendiculairement ou parallèlement à l'axe δ, selon les actions a₅ ou a₉, a₄ ou a₈, a₂, a₀ ou a₁, dans la direction et le sens indiqués par la pression du doigt de l'utilisateur.

L'apparition d'un menu à l'écran est réalisée par les actions de rotation a₀ ou a₁, et la validation d'un choix de position par l'action a₂ de pression au centre du bouton.

Avec trois capteurs de pression, plus particulièrement placés à 120° les uns des autres, le dispositif de commande peut indiquer n'importe quelle direction par une pression latérale, puisque le circuit électronique associé compare la valeur des informations de pression délivrées par chacun des trois capteurs. Il est également intéressant de placer quatre capteurs de pression à 90° les uns des autres.

Le dispositif de commande multifonctions selon l'invention a pour avantages considérables de réduire le nombre de boutons manipulables par le conducteur au niveau de la planche de bord, de définir un moyen de commande facilement manipulable à l'aveugle et une stratégie de commande commune à un nombre maximum d'équipements embarqués. Chacune des actions possibles de l'utilisateur sur le bouton correspond à une manipulation simple, intuitive et directe, distincte des autres, ce qui permet avantageusement un apprentissage facile pour l'utilisateur.

Il augmente de plus la flexibilité et l'adaptabilité du poste de conduite pour que l'introduction de nouveaux équipements et de services ne nécessite pas de nouveaux boutons de commande.

Il convient à la sélection dans une liste monodimensionnelle, à la navigation dans des menus successifs et à une sélection sur deux dimensions de type cartographie par exemple. Il constitue une interface intuitive pour la sélection d'un élément sur un afficheur, qu'il soit mono ou bidimensionnel.

Il offre deux possibilités différentes de déplacement du curseur sur un menu monodimensionnel, par rotation du bouton ou par appui sur un des côtés.

Enfin, il peut être adapté à toute une gamme de véhicules, puisqu'il est indépendant du nombre de prestations à gérer.

## Revendications

1. Dispositif de commande multifonctions constitué par un bouton (1; 20; 30) poussoir rotatif relié électriquement à au moins un équipement électronique (41) du véhicule qu'il est destiné à commander, **caractérisé en ce qu'**il comporte de plus au moins trois capteurs de pression (23; 33) solidaires d'un support (21; 31) fixe par rapport au bouton, actionnés par pressions latérales sur le bouton (1; 20; 30) et connectés à un circuit électronique permettant de définir un déplacement dans toutes les directions par comparaison des différentes pressions reçues par chacun des capteurs (23; 33) entre elles.

2. Dispositif de commande multifonctions selon la revendication 1, **caractérisé en ce que** les capteurs de pression (23) sont disposés sur le support (21) fixe par rapport au bouton (20), parallèlement à l'axe de symétrie (δ) dudit bouton, de façon à être actionnés par pressions latérales perpendiculaires au même axe (δ).

3. Dispositif de commande multifonctions selon la revendication 1, **caractérisé en ce que** les capteurs de pression (33) sont disposés sur le support (31) fixe par rapport au bouton (30), perpendiculairement à l'axe de symétrie (δ) dudit bouton, de façon à être actionnés par pressions latérales parallèles au même axe (δ).

4. Dispositif de commande multifonctions selon la revendication 2, **caractérisé en ce que** le bouton (20) est de forme symétrique autour de l'axe (δ), autour duquel il est susceptible de tourner par action de son utilisateur, et de dimension (h), ou hauteur, suivant cet axe suffisante pour permettre au doigt de l'utilisateur de pousser le bouton (20) perpendiculairement à l'axe (δ), ledit bouton (20) étant logé dans un support (21) fixe dans lequel il est susceptible d'être enfoncé par pression de l'utilisateur jusqu'à une position dite de validation, définie par un contact électrique (22) solidaire du support (21), et **en ce que** des capteurs de pression (23) sont disposés sur la paroi interne (24) du support (21) en regard du bouton (20) de façon à être comprimés lorsque le doigt de l'utilisateur exerce une pression sur un côté de la hauteur (h) du bouton.

5. Dispositif de commande multifonctions selon la revendication 3, **caractérisé en ce que** le bouton (30) est de forme symétrique autour de l'axe (δ), autour duquel il est susceptible de tourner par action de son utilisateur, et est logé dans un support (31) fixe dans lequel il est susceptible d'être enfoncé par pression de l'utilisateur jusqu'à une position dite de validation, définie par un contact électrique (32) solidaire du support (31), et **en ce que** des capteurs de pression (33) sont placés sur la surface extérieure (34) du support en regard de la périphérie (35) du bouton (30), de façon à subir des pressions exercées par le doigt de l'utilisateur parallèlement à l'axe (δ) sur un côté de ce pourtour (35).

6. Dispositif de commande multifonctions selon la revendication 5, **caractérisé en ce que** le bouton (30) est réalisé en matériau rigide dans sa partie centrale autour de l'axe de symétrie (δ) et sur son pourtour (35), et en matériau souple sur une couronne (36) centrée sur l'axe (δ) et de diamètre extérieur inférieur à celui du diamètre intérieur du pourtour permettant une dépression de la surface latérale et périphérique sans mouvement parallèle à l'axe (δ).

7. Véhicule comprenant un dispositif selon l'une des revendications précédentes et un bus multiplexé, **caractérisé en ce que** le dispositif est connecté directement au bus multiplexé (41) du véhicule à travers une interface (42) de multiplexage.

8. Véhicule comprenant un dispositif selon les revendications 1 à 6 et un bus multiplexé, **caractérisé en ce que** le dispositif est connecté au bus multiplexé (41) du véhicule par l'intermédiaire de l'unité de traitement d'un des calculateurs d'équipement (43) reliés au bus.

9. Dispositif de commande multifonctions selon l'une des revendications 2 ou 3, **caractérisé en ce que** les capteurs de pression (23, 33) sont du type piézo-électrique.

10. Dispositif de commande multifonctions selon l'une des revendications 2 ou 3, **caractérisé en ce que** les capteurs de pression (23, 33) sont au nombre de trois, disposés à 120° les uns des autres.

11. Dispositif de commande multifonctions selon l'une des revendications 2 ou 3, **caractérisé en ce que** les capteurs de pression (23, 33) sont au nombre de quatre, disposés à 90° les uns des autres.

12. Procédé de commande du dispositif selon l'une des revendications 2 ou 3, **caractérisé en ce qu'**on réalise des mouvements de pression sur un des côtés du dispositif, perpendiculairement ou parallèlement à son axe de symétrie (δ) pour déplacer un curseur dans une liste d'éléments figurant sur un écran d'affichage, ledit curseur se déplaçant d'un seul élément par pression dans la direction et le sens indiqués par la pression.

13. Procédé de commande du dispositif selon la revendication 12, **caractérisé en ce qu'**une pression continue sur un de ses côtés provoque un déplacement d'un curseur sur plusieurs items successifs, les uns après les autres, figurant sur un écran d'affichage, ce déplacement cessant avec l'arrêt de la pression sur le dispositif de commande.

14. Procédé de commande du dispositif selon l'une des revendications 2 ou 3, **caractérisé en ce qu'**on réalise des mouvements de pression sur le pourtour du bouton perpendiculairement ou parallèlement à l'axe de symétrie (δ), le dit curseur se déplaçant dans la direction et le sens indiqués par la pression.

15. Procédé de commande du dispositif selon la revendication 1, **caractérisé en ce qu'**un retour des actions correspondant à la manipulation effectuée par l'utilisateur sur le bouton est affiché sur un écran de visualisation et/ou indiqué par synthèse de la parole.

## Patentansprüche

1. Multifunktions-Steuervorrichtung, die aus einem drehbaren Tastschalter-Knopf (1, 20 , 30) besteht, der elektrisch mit mindestens einem elektronischen Ausrüstungsteil (41) des Fahrzeugs verbunden ist, zu dessen Steuerung sie bestimmt ist, **dadurch gekennzeichnet, dass** sie darüber hinaus mindestens drei Drucksensoren (23, 33) aufweist, die mit einem im Verhältnis zum Knopf (1, 20, 30) festen Träger (21, 31) verbunden sind, die durch seitlichen Druck auf den Knopf (1, 20, 30) betätigt werden und mit einer elektronischen Schaltung verbunden sind, mit dem eine Verschiebung in allen Richtungen bestimmt werden kann durch Vergleich untereinander der verschiedenen Drücke, die von jedem der Sensoren (23, 33) empfangen werden.

2. Multifunktions-Steuervorrichtung gemäß Anspruch 1, **dadurch gekennzeichnet, dass** die Drucksensoren (23) auf dem im Verhältnis zum Knopf (20) festen Träger (21) angeordnet sind, parallel zur Symmetrieachse (δ) dieses Knopfes, um durch seitlichen, zur selben Achse (δ) senkrechten Druck betätigt zu werden.

3. Multifunktions-Steuervorrichtung gemäß Anspruch 1, **dadurch gekennzeichnet, dass** die Drucksensoren (33) auf dem im Vergleich zum Knopf (30) festen Träger (31) angeordnet sind, senkrecht zur Symmetrieachse (δ) dieses Knopfes, um durch seitlichen, zur selben Achse (δ) parallelen Druck betätigt zu werden.

4. Multifunktions-Steuervorrichtung gemäß Anspruch 2, **dadurch gekennzeichnet, dass** der Knopf (20) von einer um die Achse (δ) symmetrischen Form ist, um die er geeignet ist, sich durch eine Betätigung seines Benutzers zu drehen, und von einer Dimension (h) oder Höhe, die gemäß dieser Achse ausreichend ist, um es dem Finger des Benutzers zu ermöglichen, den Knopf (20) senkrecht zur Achse (δ) zu drücken, wobei dieser Knopf (20) auf einem festen Träger (21) gelagert ist, in den er geeignet ist, durch Druck des Benutzer hineingedrückt zu werden bis zu einer Bestätigungsposition, die durch einen elektrischen Kontakt (22) bestimmt wird, der mit dem Träger (21) verbunden ist, und dadurch, dass die Drucksensoren (23) auf der inneren Wand (24) des Trägers (21) im Vergleich zu dem Knopf (20) angeordnet sind, so dass sie zusammengedrückt werden, wenn der Finger des Benutzers einen Druck auf eine Seite der Höhe (h) des Knopfs ausübt.

5. Multifunktions-Steuervorrichtung gemäß Anspruch 3, **dadurch gekennzeichnet, dass** der Knopf (30) von einer um die Achse (δ) symmetrischen Form ist, um die er geeignet ist, sich durch eine Betätigung seines Benutzers zu drehen, und auf einem festen Träger (31) gelagert ist, in den er geeignet ist, durch Drücken des Benutzers hineingedrückt zu werden bis zu einer Bestätigungsposition, die durch einen elektrischen Kontakt (32) bestimmt wird, der mit dem Träger (31) fest verbunden ist, und dadurch, dass die Drucksensoren (33) auf der äußeren Wand (34) des Trägers (31) im Vergleich zu dem Rand (35) des Knopfes (30) angeordnet sind, so dass sie die Drücke erfahren, die durch den Finger des Benutzers parallel zur Achse (δ) auf einer Seite dieser Umrandung (35) ausgeübt werden.

6. Multifunktions-Steuervorrichtung gemäß Anspruch 5, **dadurch gekennzeichnet, dass** der Knopf (30) in seinem mittleren Teil um die Symmetrieachse (δ) und an seiner Umrandung (35) aus steifem Material hergestellt ist, und aus weichem Material an einem Ring (36), der um die Achse (δ) zentriert ist und dessen äußerer Durchmesser kleiner ist als der des inneren Durchmessers der Umrandung, wodurch ein Herunterdrücken der seitlichen und äußeren Oberfläche ohne parallele Bewegung zu der Achse (δ) ermöglicht wird.

7. Fahrzeug, aufweisend eine Vorrichtung gemäß einem der vorhergehenden Ansprüche und einen Multiplex-Bus, **dadurch gekennzeichnet, dass** die Vorrichtung über eine Multiplex-Schnittstelle (42) direkt an den Multiplex-Bus (41) des Fahrzeugs angeschlossen ist.

8. Fahrzeug, aufweisend eine Vorrichtung gemäß den Ansprüchen 1 bis 6 und einen Multiplex-Bus, **dadurch gekennzeichnet, dass** die Vorrichtung über die Verarbeitungseinheit eines mit dem Bus verbundenen Ausstattungsteil-Rechners (43) an den Multiplex-Bus (41) des Fahrzeugs angeschlossen ist.

9. Multifunktions-Steuervorrichtung gemäß einem der Ansprüche 2 oder 3, **dadurch gekennzeichnet, dass** die Drucksensoren (23, 33) piezoelektrischer Art sind.

10. Multifunktions-Steuervorrichtung gemäß einem der Ansprüche 2 oder 3, **dadurch gekennzeichnet, dass** die Drucksensoren (23, 33) von der Anzahl drei sind, bei 120° zueinander angeordnet.

11. Multifunktions-Steuervorrichtung gemäß einem der Ansprüche 2 oder 3, **dadurch gekennzeichnet, dass** die Drucksensoren (23, 33) von der Anzahl vier sind, bei 90° zueinander angeordnet.

12. Steuerverfahren der Vorrichtung gemäß einem der Ansprüche 2 oder 3, **dadurch gekennzeichnet, dass** man die Druckbewegung auf einer der Seiten der Vorrichtung ausführt, senkrecht oder parallel zu seiner Symmetrieachse (δ), um einen Cursor in einer Liste von Elementen zu bewegen, die auf einer Bildschirmanzeige dargestellt sind, wobei sich dieser Cursor pro Druck um ein einziges Element in der Richtung und dem Sinn fortbewegt, die durch den Druck angezeigt sind.

13. Steuerverfahren der Vorrichtung gemäß Anspruch 12, **dadurch gekennzeichnet, dass** ein fortdauernder Druck auf einer seiner Seiten eine Cursorbewegung über mehrere aufeinanderfolgende auf einer Bildschirmanzeige dargestellte Items hinweg auslöst, eins nach dem anderen, wobei diese Bewegung mit dem Stopp des Drucks auf die Steuervorrichtung endet.

14. Steuerverfahren der Vorrichtung gemäß einem der Ansprüche 2 oder 3, **dadurch gekennzeichnet, dass** man die Druckbewegungen auf die Umrandung des Knopfes senkrecht oder parallel zur Symmetrieachse (δ) ausführt, wobei sich der Cursor in der Richtung und dem Sinn fortbewegt, die durch den Druck angezeigt werden.

15. Steuerverfahren der Vorrichtung gemäß Anspruch 1, **dadurch gekennzeichnet, dass** eine Wiederholung der Handlungen, die der durch den Benutzer ausgeführten Manipulation auf den Knopf entspricht, auf einem Visualisierungsbildschirm dargestellt wird und/oder durch Sprachsynthese angezeigt wird.

## Claims

1. A multi-function control device formed by a rotary push button (1; 20; 30) connected electrically to at least one electronic accessory (41) of the vehicle which it is adapted to control, **characterised in that** it also comprises at least three pressure sensors (23; 33) rigid with a support (21; 31) fixed with respect to the button (1; 20; 30), actuated by lateral pressure on the button (1; 20; 30) and connected to an electronic circuit making it possible to define a movement in all directions by comparison of the different pressures received by each of the sensors (23; 33).

2. A multi-function control device as claimed in claim 1, **characterised in that** the pressure sensors (23) are disposed on the support (21) fixed with respect to the button (20), parallel to the axis of symmetry (δ) of the button, in order to be actuated by lateral pressures perpendicular to this axis (δ).

3. A multi-function control device as claimed in claim 1, **characterised in that** the pressure sensors (33) are disposed on the support (31) fixed with respect to the button (30), perpendicular to the axis of symmetry (δ) of the button, in order to be actuated by lateral pressures parallel to this axis (δ).

4. A multi-function control device as claimed in claim 2, **characterised in that** the button (20) is of symmetrical shape about the axis (δ), about which it may be rotated by its user, and of dimension (h), or height, along this axis sufficient to enable the user's finger to press the button (20) perpendicular to the axis (δ), this button (20) being housed in a fixed support (21) into which it may be depressed by pressure from the user up to a so-called validation position, defined by an electrical contact (22) rigid with the support (21), and **in that** pressure sensors (23) are disposed on the inner wall (24) of the support (21) facing the button (20) so as to be compressed when the user's finger exerts a pressure on one side of the height (h) of the button.

5. A multi-function control device as claimed in claim 3, **characterised in that** the button (30) is of symmetrical shape about the axis (δ), about which it may be rotated by its user, and is housed in a fixed support (31) into which it may be depressed by pressure from the user up to a so-called validation position, defined by an electrical contact (32) rigid with the support (31), and **in that** pressure sensors (33) are disposed on the external surface (34) of the support facing the periphery (35) of the button (30) so as to be subject to the pressures exerted by the user's finger parallel to the axis (δ) on one side of this periphery (35).

6. A multi-function control device as claimed in claim 5, **characterised in that** the button (30) is made from rigid material in its central portion about the axis of symmetry (δ) and on its periphery (35) and from flexible material over a crown (36) centred on the axis (δ) and of external diameter smaller than the inner diameter of the periphery enabling a depression of the lateral and peripheral surface without a movement parallel to the axis (δ).

7. A vehicle comprising a device as claimed in one of the preceding claims and a multiplex bus, **characterised in that** the device is connected directly to the multiplex bus (41) of the vehicle via a multiplexing interface (42).

8. A vehicle comprising a device as claimed in one of claims 1 to 6 and a multiplex bus, **characterised in that** the device is connected to the multiplex bus (41) of the vehicle via the processing unit of one of the accessory computers (43) connected to the bus.

9. A multi-function control device as claimed in one of claims 2 or 3, **characterised in that** the pressure sensors (23, 33) are of piezoelectric type.

10. A multi-function control device as claimed in one of claims 2 or 3, **characterised in that** there are three pressure sensors (23, 33) disposed at 120° from one another.

11. A multi-function control device as claimed in one of claims 2 or 3, **characterised in that** there are four pressure sensors (23, 33) disposed at 90° from one another.

12. A control method for the device as claimed in one of claims 2 or 3, **characterised in that** pressure movements are made on one of the sides of the device, perpendicular or parallel to its axis of symmetry (δ), in order to move a cursor over a list of items shown on a display screen, the cursor moving by one item by pressure in the direction and the sense indicated by the pressure.

13. A control method for the device as claimed in claim 12, **characterised in that** a continued pressure on one of its sides causes the cursor to move over several successive items, one after the other, on a display screen, this movement ceasing when the pressure on the control device stops.

14. A control method for the device as claimed in one of claims 2 or 3, **characterised in that** pressure movements are made on the periphery of the button perpendicular or parallel to the axis of symmetry (δ), the cursor moving in the direction and the sense indicated by the pressure.

15. A control method for the device as claimed in claim 1, **characterised in that** a report on the actions corresponding to the manipulation performed by the user on the button is displayed on a display screen and/or imparted by speech synthesis.
